# EUROPEAN PATENT APPLICATION

(11) **EP 4 694 287 A1**
(43) Date of publication of application: **11.02.2026**
(21) Application number: 25382093.0
(22) Date of filing: 06.02.2025
(51) Int. Cl.: H04W 24/02, H04W 52/02, H04W 88/18

(54) **NETWORK SLICE CREATION**

(30) Priority: 09.08.2024 EP 24382900
(71) Applicant: Vodafone Group Services Limited, Newbury RG14 2FN (GB)
(72) Inventor: ROMAGUERA, Cristina, London, W2 6BY (GB); SABATER, Susana Maria, London, W2 6BY (GB); GONZALEZ, Veronica, London, W2 6BY (GB)
(74) Representative: Boult Wade Tennant LLP

(57) **Abstract**

The present disclosure provides a method for use in creating a Network Slice in a telecommunications network. The method comprises receiving information from a plurality of network nodes with which the Network Slice can be realised. In response to a request received at the intelligent network entity containing one or more criteria for the Network Slice, a list of one or more network nodes is generated using a machine learning model and the received information, wherein the list indicates a level of confidence that each of the one or more network nodes can fulfil the one or more criteria. The list is provided to a Network Service Provider, NSP, such that the NSP can identify, based on the level of confidence of each one or more network nodes in the list, whether there are suitable network nodes in the telecommunications network for creating the Network Slice.

## Description

### FIELD OF INVENTION

The present disclosure relates to creating a Network Slice. In particular, the invention relates to generating a list of one or more network nodes with which the Network Slice can be realised.

### BACKGROUND

In the telecommunications industry, the concept of network slicing allows operators to provide customized networks, enhancing service differentiation. Network slicing, as defined by the 3rd Generation Partnership Project (3GPP), enables the creation of multiple virtual networks, each tailored to different performance requirements, such as speed, latency, and reliability, over a single physical infrastructure. According to 3GPP TS 22.261, these slices operate independently and can provide the functionality of a complete network, including radio access network functions, core network functions, and IMS functions. As such, they can be optimized for different types of services (e.g., one slice optimized for highspeed internet guaranteeing the transmission of high-quality videos, while another is designed for low-latency communication needed for remote surgeries). The primary goal is to maximize resource utilization while providing tailored services that meet diverse customer needs.

As customer demand for network slicing increases, the energy consumption of the underlying infrastructure, including data centres and network equipment, also rises. Network slicing currently lacks energy-efficient solutions. Integrating renewable energy sources into the network infrastructure can significantly reduce their carbon footprint. Combining the renewable energy consumption information provided by the data centres, and the configuration of Network Slices, it is possible to maximize the utilization of renewable energy during the operation and maintenance of the network.

Proposals concerning renewable energy usage in 5G networks have also been made in the 3GPP SA5 Working Group compiling TR 28.880 v1.1.0.

### SUMMARY

Against this background, the present disclosure provides a method for use in creating a Network Slice according to claim 1. An intelligent network entity is also defined by claim 14. Other preferred features are disclosed with reference to the claims and in the description below.

An intelligent network entity receives information from a plurality of network nodes with which the Network Slice can be realised. The intelligent network entity generates a list of one or more network nodes using a machine learning model and the received information, wherein the list indicates a level of confidence that each of the one or more network nodes can fulfil one or more criteria (also referred to herein as requirements or parameters). The list is generated in response to a request received at the intelligent network entity containing one or more criteria for the Network Slice. The list is provided to a Network Service Provider, NSP, such that the NSP can identify, based on the level of confidence of each one or more network nodes in the list, whether there are suitable network nodes in the telecommunications network for creating the Network Slice.

By combining both a request from the NSP, and inputs from a plurality of network nodes, the new intelligent network entity is able to create a list of suitable network nodes may fulfil the requirements for creating a network slice. The list of network nodes is provided to a NSP, thus requiring less processing at the NSP to determine which network node to use to realise the network slice. The use of a machine learning model to generate the list further improves the selection of a suitable network node for realising the network slice. The machine learning model may identify patterns, enabling the intelligent network entity to predict changes to the status of the network nodes. Therefore, the intelligent network entity may determine which network nodes are most convenient or most suitable for a particular network slice.

In some examples, each of the network nodes may be located within a data centre, wherein each of the network nodes may be located in different data centres. Alternatively, a network node may be located in the same data centre as another network node.

In some examples, the intelligent network entity may receive information continuously, repeatedly, and/or dynamically. In other words, the intelligent network entity may receive up to date information from the network nodes, such that the intelligent network entity has the current status of each of the network nodes.

In some examples, the machine learning model may be trained using the received information. The machine learning model may be trained continuously, repeatedly, and/or dynamically. In other words, the machine learning model may be trained using historical data. The machine learning model may be trained on data about the congestion or load of the data centres, or network nodes, so that it may be able to analyse what are the best network nodes within the data centres. For example, the machine learning model may be trained using data containing information on one or more of: communication service characteristics, capacity, traffic patterns, energy, latency, or location.

In some examples, where there is a plurality of criteria, one or some of those criteria may be prioritised. Each of the one or more criteria may be given a priority. The intelligent network entity may determine the level of confidence which reflects the efficiency of the network nodes and their data centre.

In some examples, one criterion may be that the network node is located within a data centre with renewable energy. In some examples, this criterion may be prioritised.

In some examples, the one or more criteria may relate to one or more of: communication service characteristics, capacity, traffic patterns, energy, latency, or location.

In some examples, the telecommunications network may be a cellular network, and the plurality of data centres may be Core Network data centres.

In some examples, the method may comprise the NSP communicating the identity of one or more suitable network nodes to a Network Slice Customer.

### BRIEF DESCRIPTION OF DRAWINGS

The present invention may be put into practice in a number of ways and embodiments will now be described by way of example only and with reference to the accompanying drawings, in which:
Figure 1 depicts a flowchart of a method according to the present disclosure.
Figure 2 depicts an example of interactions between different entities for creating a Network Slice, comprising aspects of the present disclosure; and

It should be noted that the figures are illustrated for simplicity and are not necessarily drawn to scale. Like features are provided with the same reference numerals.

### DETAILED DESCRIPTION OF PREFERRED EMBODIMENTS

Hereinafter, examples of the disclosure are described with reference to the accompanying drawings. However, it should be appreciated that the disclosure is not limited to the described examples, and all changes and/or equivalents or replacements thereto also belong to the scope of the disclosure. The same or similar reference denotations may be used to refer to the same or similar elements throughout the specification and the drawings.

The following description is directed to certain implementations for the purposes of describing innovative aspects of various embodiments. However, a person having ordinary skill in the art will readily recognize that the teachings herein can be applied in a multitude of different ways.

In some aspects, this disclosure builds upon the procedures outlined in 3GPP TS 28.531 v19.0.0 and 3GPP TS 28.541 v19.2.1. Annex A of TS 28.531 explains Network Slice provisioning in a general sense. For example, an initial step in Network Slice provisioning involves a Network Slice Customer (NSC) communicating a request for a Network Slice to a NSP. As part of this request, the NSC indicates a service profile (in 3GPP standards, this message is termed "ServiceProfile"), along with a set of parameters. Example parameters are discussed in section 4.3 of TS 28.531, noting "Capability model information, which describes the capability including supported communication service characteristic information (e.g. service type, UE mobility level, density of users, traffic density), QoS attributes (e.g. bandwidth, latency, throughput and so on) and capacity (e.g. maximum number of UEs), can be exposed to CSC" (Communication Service Customer). Further parameters are also described in section 6.3.3.2 of TS 28.541. Additionally, TS 28.531 second 5.1.6 discusses a "Network slice feasibility check", in which the NSP evaluates the feasibility of a data centre satisfying the network slice requirements. Aspects of the present disclosure may be based on such 3GPP references.

The present disclosure proposes the use of a new entity, to determine one or more network nodes which are suitable for satisfying the network slice requirements. The network nodes may be located within one or more data centres, i.e. some network nodes may be located in the same data centres as other network nodes, and some network nodes may be located in different data centres to other network nodes. The entity may be configured to analyse current and historic data. The entity may be configured to make decisions or predictions based on historic or present data. The entity may use machine learning, wherein the machine learning model may be trained using data received from one or more network nodes over a period of time. This entity may be referred to as an "intelligent network entity", and reference to an intelligent network entity will be used herein for clarity when discussing other network entities. However, it will be appreciated that any instance of "intelligent network entity" may be referred to as a "network entity".

The intelligent network entity is configured to receive two types of inputs. The first input comes from the Network Slice Provider (NSP). The NSP receives a slice creation request from the Network Slice Customer (NSC), and it consists of the specific requirements from an OAM (Operation and Maintenance) perspective, related to the slice creation request. These requirements may need to be satisfied for the network node to be feasible, or the requirements may need to be met by a certain percentage for the network node to be feasible. For example, the requirement may be for a certain amount of renewable energy, but the network node may be feasible if the network node has 70% of the renewable energy. The NSP communicates the requirements to the intelligent network entity requesting a list of one or more network nodes which are suitable for fulfilling the requirements of the NSC. The NSP may request that the list is ordered, as described in one example herein. The second input received at the intelligent network entity is information from one or more network nodes. The information may relate to the requirements of the NSC. For example, the information may relate to energy consumption and additional traffic and performance KPIs (Key Performance Indicators), among others. This information received from the one or more network nodes therefore permits the entity to create a degree of confidence (also referred to as a level of confidence) that each of the one or more network nodes may fulfil the requirements of the NSC and therefore be suitable for realising the network slice. In some examples, as described herein, the new intelligent network entity may be able to rank the one or more network nodes in the list, according to the determined level of confidence. The request sent to the new intelligent network entity from the NSP may include a request for such a ranked list. By using a ranked list, the NSP is able to select a backup network node which can be used if the first choice is unavailable. It will be appreciated, that the network slice may be realised using a combination of different network nodes.

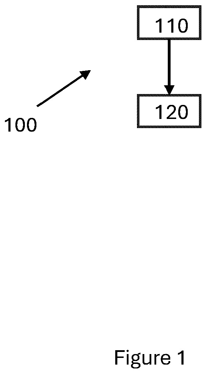

Referring now to Figure 1, here is shown a flowchart of a method 100 according to the present invention. The method is for use in creating a network slice in a telecommunications network. The method is carried out by an intelligent network entity, as will be described in examples herein, the steps performed at the intelligent network entity may be combined with steps carried out at a NSP and/or an NSC.

At step 110 the intelligent network entity receives information from a plurality of network nodes, with which the network slice can be realised. In some examples, the intelligent network entity may request the information from the data centres. The intelligent network entity may request the information using round robin scheduling. It will be appreciated that although the information is used to determine a list of network nodes, information about the data centres may be requested, including the network nodes available. The information received may relate to one or more of: communication service characteristics, capacity in terms of resources, traffic patterns (depending on bandwidth availability, congestion, etc.), energy (energy consumption, average amount of renewable energy supplied to or self-generated by each network node), latency or location. The one or more network nodes may also provide information to the intelligent network entity about renewable energy consumption. This information can additionally (or alternatively) indicate whether the renewable energy is grid sourced and/or locally sourced (and optionally, the proportions or absolute amounts of each). It will be understood that this information is only an example, and therefore the one or more network nodes may send other types of information to the intelligent network entity. The information may be received from the one or more network nodes continuously, repeatedly, and/or dynamically.

At step 120 the intelligent network entity generates a list of one or more network nodes using a machine learning model and the received information, wherein the list indicates a level of confidence that each of the one or more network nodes can fulfil the one or more criteria. The list may not comprise all of the available network nodes, and instead may select a subset. For example, the intelligent network entity may select a list of the five network nodes with the highest confidence levels.

In an example in which data is received continuously, repeatedly and/or dynamically, the list may be generated on the most recent information received from each of the network nodes. Therefore, the list is generated based on the most up to date information from the one or more network nodes, i.e. the current status of the one or more network nodes. However, as described herein, the intelligent network entity monitors the received data, and the machine learning model may be trained on the data (i.e. historical data). Therefore, the machine learning model may predict changes that may happen, which would not be possible by analysing only the current information. For example, if the machine learning model has identified a pattern that between 9am and 5pm each day, there is less capacity at network node number 1, the machine learning model may generate the degree of confidence for network node number 1 using the combination of the most up to date information combined with the identified pattern.

The list may be generated in response to the intelligent network entity receiving a request which contains one or more criteria for the network slice. The intelligent network entity may be configured to analyse each type of data that the NSP has mentioned in its request, when generating the list. In one example, the machine learning model may be trained using the information received from the one or more network nodes. When the information is received from the one or more network nodes continuously, the machine learning model may be trained continuously.

The one or more criteria may be prioritised over the rest of the criteria. The intelligent network entity determines the level of confidence which reflects the efficiency of the network nodes and their data centre.

In some examples, one criterion may be that the network node is located within a data centre with renewable energy supply which implies prioritising this criterion.

The one or more criteria may be prioritised over the rest of the criteria. The one or more criteria which are prioritised may be the parameters which are included in the ServiceProfile. As described in a detailed example herein, a weight may be assigned to a parameter depending on whether the parameter is prioritised. a One criterion may be that the network node has a minimum of renewable energy presence. In some examples this criterion may be prioritised. In embodiments, the indication of a minimum amount of renewable energy to be used for realisation of the Network Slice and/or the information of renewable energy consumption comprises a proportion of total energy that is renewable. Additionally or alternatively, the indication of a minimum amount of renewable energy to be used for realisation of the Network Slice and/or the information of renewable energy consumption comprises an absolute amount of energy that is renewable.

The generated list is provided to a network service provider (NSP) such that the NSP can identify, based on the level of confidence of each one or more network nodes in the list, whether there are suitable network nodes in the telecommunications network for creating the Network Slice. In other words, the NSP receives the list, and decides which one or more network nodes are the best to create the network slice.

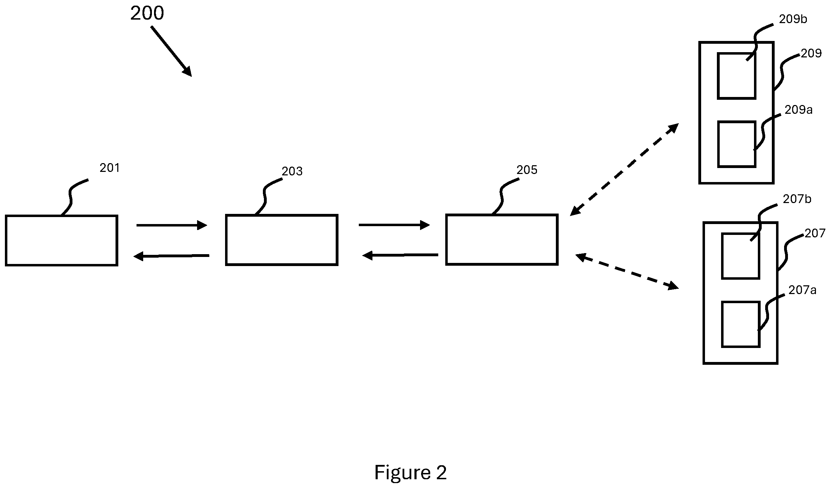

Referring to figure 2, there is a sequence diagram that illustrates an example of interactions between the NSC, the NSP and the intelligent network entity during a network slice creation process. The arrows indicate the direction in which information is sent. The example of figure 2 illustrates an example in which the network slice has environmental requirements (i.e. one of the one or more criteria is an environmental criteria). However, it will be appreciated that the technical considerations apply to any type of network slice requirements. It describes an example exchange of messages and operations between these entities, in the example in which the intelligent network entity creates a ranked list of network nodes by a degree of confidence, and where the NSP uses this list to determine the feasibility of the network nodes.

In a first step, the NSC 201 initiates a request to the NSP 203 for a specific environmental-friendly network slice that shall meet some environmental characteristics, for example there may be a criterion of a minimum of renewable energy presence. As described herein, the NSC may send a set of criteria (i.e requirements) to the NSP which a suitable network node should comprise. The NSC requires a dedicated set of network resources with specific characteristics, which may be communicated to the NSP within a ServiceProfile included in the request.

The ServiceProfile is a data type defined in 3GPP TS 28.541 that can specify several parameters (e.g. availability, latency, coverage area or KPIs), which may be used as criteria for the network slice. As shown in 3GPP TS 28.541 the requirements in ServiceProfile are data types with a defined structure. In this example, the parameters have a data type included in the ServiceProfile data type with the following characteristics:

| **Attribute name** | **S** | **isReadable** | **isWritable** | **islnvariant** | **isNotifyable** |
|---|---|---|---|---|---|
| RenewableEnergy | M | T | F | T | T |

In a second step, upon receiving the NSC's request, the NSP 203 needs to identify the most suitable network nodes to fulfil the network slice requirements. To do so, it sends a request to the intelligent network entity 205, containing criteria in line with the ServiceProfile received from the NSC and, in this example, asking for a list of network nodes sorted by their degree of confidence, a ranked list.

In a third step of this example, the intelligent network entity 205 generates a list of network nodes (207a, 207b, 209a, 209b) within data centres (207, 209) ranked by confidence level. Network nodes 207a and 207b are located within data centre 207, and network nodes 209a and 209b are located within data centre 209. This list is customized depending on the request from the NSC 201, and thus the request sent from the NSP 203 to the intelligent network entity 205. The intelligent network entity gathers information continuously, repeatedly and/or dynamically related to the different network nodes in the different data centres, learning continuously from traffic patterns, energy consumption, node capacity and average of renewable energy supplied or self-generated by each data centre. It uses a supervised machine learning mode to create a model where it may for example calculate the learned congestion, and/or learned load for each data centre.

The intelligent network entity then applies its learning to generate the requested ranked list, ordered by degree of confidence. As described herein, ranked list may comprise all of the available network nodes, or it may only comprise a subset of the available network nodes where the list determines the subset based on their confidence levels. For example, the intelligent network entity may generate a list comprising the five network nodes with the highest confidence levels. The NSP may request a certain number of network nodes in the list, where the number may be predetermined.

This level of confidence reflects the efficiency of the network nodes and their data centre by using an algorithm that can give priority to network nodes within data centres. In this example, network nodes within data centres which are powered by renewable energy are given priority. The algorithm may also incorporate additional factors when determining the final ranking. In other words, the degree of confidence may be determined based on a number of criteria, which may have different levels of priority.

In a fourth step, the intelligent network entity provides the NSP with the ranked list of suitable network nodes. The list is already customized and sorted as mentioned in the third step, which makes the NSP's selection faster. The selection of a suitable network node by the NSP requires less processing power as a large proportion of the data is analysed at the intelligent network entity instead of at the NSP itself.

As a fifth step, once the NSP receives the ranked list from the intelligent network entity, it determines the optimal network nodes to compose the network slice requested. This may be by only considering the list, or by considering the ranked list and other additional information. For example, contextual and contractual information may also be considered. This optional adjustment to the list based on other information provides an optimised list to ensures that the selected network nodes are both feasible and optimal, based on all available information at the time of creation.

As a sixth step, when the NSP determines the optimal network nodes, the NSC is informed whether the requested network slice can be created with the level of compliance to the NSC requirements. If no network nodes fulfil the requirements, the NSC may be notified that the creation with the intended energy requirements is not feasible. This step effectively translates the technical details into a clear response for the NSC, confirming whether their requirements can be fulfilled using the appropriate network infrastructure. Alternatively, the NSP may have instructions to select a network node which can fulfil only a subset of the criteria met by one of the network nodes.

In the embodiments described herein, the NSC may be notified that one or more network nodes can fulfil the requirements, or that none of the one or more network nodes can fulfil the requirements. The NSC may be provided with the degree of confidence with which the network node may fulfil the requirements. The NSC may be notified using a feasibility message sent from the NSP to the NSC. In the case in which no network nodes can fulfil the requirements of the NSC, a 'best effort' list may be provided to the NSC. In other words, the NSP may create a slice which does not fulfil all of the requirements, but is the best fit, such that a network slice is always created instead of sending an empty list. In this case, the NSC is notified that the created network slice does not fulfil the requirements.

### A detailed example of an intelligent network entity

This example describes one or more method steps which may be performed by an intelligent network entity. In this example, the intelligent network entity receives inputs from two different sources: customer (e.g. the NSC) and data centres.

In a first example, the NSC may provide to the NSP some requirements in the ServiceProfile (3GPP TS 28.541 clause 6.3.3) contained in the AllocateNsi Request. The NSP may map the ServiceProfile information to understandable criteria for the intelligent network entity. For this example, the following requirements are provided:
- Capacity: At least 600 user plane VMs (virtual machines), 350 control plane VMs and 70 TB of storage.
- Location: The customer prefers a data centre closer to Granada (GR).
- Renewable Energy: The customer prefers data centres with higher renewable energy, but it is not a disqualifying factor.

This information is provided by the NSP to the intelligent network entity to influence on the selection of the most optimal data centre.

In a second example, information is gathered by the intelligent network entity from the data centres continuously. These gathered parameters serve as performance metrics to select the optimal data centre. We have indicated just a few of the whole set of parameters as an example. Some of those parameters are generated by learning how the data centre behaves, and then predicting a value (learned congestion is an example of this).

Note that the information is separated by user plane (UP) resources and control plane (CP). The reason behind that is that different data centres may be used for the user plane and for the control plane to fulfil the requirements.

For this example, the following information has been stored for UP in each data centre:

**Table 1. Information stored in intelligent network entity for user plane**

| Parameters | Data centre A - UP | Data centre B-UP | Data centre C-UP |
|---|---|---|---|
| Capacity (VMs) | 500 VMs | 1200 VMs | 900 VMs |
| Capacity (Terabyte storage) | 50 TB | 100 TB | 75 TB |
| Location (distance in kilometres from Granada) | Malaga, Spain 125 km | Madrid, Spain 420 km | Barcelona, Spain 850 km |
| Learned congestion | 60% | 40% | 80% |
| Avg. BW DL | 1200 Mbps | 1300 Mbps | 1100 Mbps |
| Avg. BW UL | 1000 Mbps | 1200 Mbps | 950 Mbps |
| Renewable energy | 70% | 30% | 80% |
| Energy Efficiency | 400 kWh/day | 600 kWh/day | 500 kWh/day |
| Avg. latency | 50 ms | 30 ms | 40 ms |
| Cost | €0.12/kWh | €0.15/kWh | €0.14/kWh |

For this example, the following information has been stored for CP in each data centre:

**Table 2. Information stored in intelligent network entity for user plane**

| Parameters | Data centre A-CP | Data centre B - CP | Data centre C-CP |
|---|---|---|---|
| Capacity (VMs) | 350 VMs | 650 VMs | 700 VMs |
| Capacity (TB storage) | 45 TB | 80 TB | 65 TB |
| Location (distance in km from Granada) | Malaga, Spain 125 km | Madrid, Spain 420 km | Barcelona, Spain 850 km |
| Learned congestion | 45% | 30% | 60% |
| Avg. BW DL | 0 Mbps | 0 Mbps | 0 Mbps |
| Avg. BW UL | 0 Mbps | 0 Mbps | 0 Mbps |
| Renewable energy | 70% | 30% | 80% |
| Energy Efficiency | 400 kWh/day | 600 kWh/day | 500 kWh/day |
| Avg. latency | 15 ms | 7 ms | 10 ms |
| Cost | €0.12/kWh | €0.15/kWh | €0.14/kWh |

As shown in the previous tables, parameters such as capacity, congestion, bandwidth and latency are different depending on user plane or control plane resources, whereas location, energy and cost is the same for one data centre.

This information is collected in a different way for each parameter:
- Capacity (VMs and Storage): Collected via the data centre management platform (e.g., APIs from the cloud provider, data centre management software).
- Location: Collected based on the physical location of the data centre, usually from the provider's information or location APIs.
- Traffic pattern: This considers fluctuations throughout the day. For example, there may be occasional spikes, or traffic could vary at different times of the day. To properly account for this, it is essential to measure both congestion and the uplink and downlink bandwidth.
   ∘ Congestion: This is monitored in real-time through the data centre's load and resource metrics, often accessible via cloud service APIs.
   ∘ Average bandwidth uplink/downlink: This is gathered using network monitoring tools that track inbound and outbound data rates.
- Renewable Energy: It considers both by contract and self-generated renewable energy. It is collected through the data centre's environmental or energy report, or directly from the provider's green energy initiatives.
- Energy Efficiency: Collected from the data centre's power usage reports or through management APIs that report daily energy consumption.
- Average latency: Collected via network monitoring tools or ping tests to measure the round-trip time between client locations and the data centre.
- Cost: Collected from the provider's pricing model (e.g., cost per kWh of energy consumed).

In order to be able to compare the different parameters, the results are normalized. The intelligent network entity may not need to normalize the results for all the data centres, as only the ones that satisfy the initial requirements will be added to the final list. For this example, the data centre A for user plane is discarded because the capacity requirement is not fulfilled, whereas data centre A for control plane is suitable.

For each parameter, the values are normalized based on the maximum and minimum values within the data centres. The formula is to divide the current number between the maximum. For example, to calculate the normalized value of VMs in data centre A, the process would be "500 VMs / 800 VMs = 0.625". For location, the formula is "1 - (Distance to Granada/Max distance to Granada)". For example, for data centre A, "1 - (125/850) = 0.853".

**Table 3. Information normalized for user plane**

| Parameters | DCA - UP (discarded) | DCB - UP | DCC - UP |
|---|---|---|---|
| Capacity (VMs) | 0.31 | 1.00 | 0.75 |
| Capacity (TB storage) | 0.50 | 1.00 | 0.75 |
| Location (km to GR) | 0.85 | 0.51 | 0.00 |
| Learned congestion | 0.40 | 0.60 | 0.20 |
| Avg. BW DL | 0.92 | 1.00 | 0.85 |
| Avg. BW UL | 0.83 | 1.00 | 0.79 |
| Renewable energy | 0.70 | 0.60 | 0.80 |
| Energy Efficiency | 0.67 | 1.00 | 0.83 |
| Avg. latency | 0.60 | 1.00 | 0.75 |
| Cost | 1.00 | 0.80 | 0.86 |

**Table 4. Information normalized for control plane**

| Parameters | DCA - UP | DCB - UP | DCC - UP |
|---|---|---|---|
| Capacity (VMs) | 0.35 | 1.00 | 0.82 |
| Capacity (TB storage) | 0.56 | 1.00 | 0.81 |
| Location (km to GR) | 0.85 | 0.51 | 0.00 |
| Learned congestion | 0.55 | 0.70 | 0.40 |
| Avg. BW DL | 0.00 | 0.00 | 0.00 |
| Avg. BW UL | 0.00 | 0.00 | 0.00 |
| Renewable energy | 0.70 | 0.60 | 0.80 |
| Energy Efficiency | 0.67 | 1.00 | 0.83 |
| Avg. latency | 0.47 | 1.00 | 0.70 |
| Cost | 1.00 | 0.80 | 0.86 |

These normalised values shown in tables 3 and 4 may indicate the level of confidence for each parameter. To create the ordered list, it is beneficial to use a machine learning method, as it is requested to order it by optimal data centre, and it is not the same as ordering by one of the parameters. For this reason, multiples parameters and decisions need to be taken into consideration. Thus, dynamic weights can be assigned to each parameter, based on configured priorities defined by the operator and customer preferences provided in the request. In other words, the priorities are provided to the intelligent network entity by the NSP. This way, certain aspects can be prioritized by giving a weight to each parameter.

For this case, renewable energy is very important, whereas cost is less important. The weights are assigned accordingly by the intelligent network entity.

**Table 5. Weights associated to each parameter**

| Parameters | Weight |
|---|---|
| Capacity (VMs) | 0,3 |
| Capacity (TB storage) | 0.3 |
| Location | 0.2 |
| Learned congestion | 0.1 |
| Avg. BW DL | 0.05 |
| Avg. BW UL | 0.05 |
| Renewable energy | 0.3 |
| Energy Efficiency | 0.05 |
| Avg. latency | 0.05 |
| Cost | 0.0 |

By using these weights, a "weighted score" can be calculated for each the data centre. The weighted score is the sum of each normalized value multiplied by its weight. Weighted score = Normalized capacity (VMs) x 0.3 + Normalized capacity (TB storage) x 0.3 + Normalized location x 0.2 + Learned congestion x 0.1 + Avg. BW DL x 0.05 + Avg. BW UL x 0.05 + Renewable energy x 0.3 + Energy Efficiency x 0.05 + Avg. latency x 0.05 + Cost x 0.0

**Table 5. Weighted values and weighted score for user plane**

| Parameters | DCA - UP (discarded) | DCB - UP | DCC - UP |
|---|---|---|---|
| Capacity (VMs) | 0.09 | 0.30 | 0.23 |
| Capacity (TB storage) | 0.15 | 0.30 | 0.23 |
| Location (km to GR) | 0.17 | 0.10 | 0.00 |
| Learned congestion | 0.04 | 0.06 | 0.02 |
| Avg. BW DL | 0.05 | 0.05 | 0.04 |
| Avg. BW UL | 0.04 | 0.05 | 0.04 |
| Renewable energy | 0.21 | 0.18 | 0.24 |
| Energy Efficiency | 0.03 | 0.05 | 0.04 |
| Avg. latency | 0.03 | 0.05 | 0.04 |
| Cost | 0.00 | 0.00 | 0.00 |
| **Weighted score** | **0.82** | **1.14** | **0.87** |

**Table 6. Weighted values and weighted score for control plane**

| Parameters | DCA - CP | DCB - CP | DCC -CP |
|---|---|---|---|
| Capacity (VMs) | 0.11 | 0.30 | 0.25 |
| Capacity (TB storage) | 0.17 | 0.30 | 0.24 |
| Location (km to GR) | 0.17 | 0.10 | 0.00 |
| Learned congestion | 0.06 | 0.07 | 0.04 |
| Avg. BW DL | 0.00 | 0.00 | 0.00 |
| Avg. BW UL | 0.00 | 0.00 | 0.00 |
| Renewable energy | 0.21 | 0.18 | 0.24 |
| Energy Efficiency | 0.03 | 0.05 | 0.04 |
| Avg. latency | 0.02 | 0.05 | 0.04 |
| Cost | 0.00 | 0.00 | 0.00 |
| **Weighted score** | **0.77** | **1.05** | **0.85** |

After all these considerations, in this example, the intelligent network entity sends two lists to the NSP:
1. Suitable data centres for user plane: The list only contains two instances as data centre A was discarded because the capacity is not enough to satisfy the customer's requirements. The highest instance in the list is DCB (Madrid) with a weighted score of 1.14, and the second one is DCC (Barcelona) with 0.87.
2. Suitable data centres for control plane: The list considers all the data centres as all of them fulfil the initial requirements and the order is (1) DCB, (2) DCC and (3) DCA, as per the weighted score.

In the second list note that, even if the renewable energy in DCA is higher than in DCB, DCB is more optimal than DCA when all the parameters are considered. However, the most optimal node is DCC, which is the data centre which has higher renewable energy profile. In the end, as the parameters to prioritize have a higher weight, they will be more influential in the final score and final decision.

It will be understood that the detailed example of an intelligent network entity described herein is only one example. An intelligent network entity may carry all, some, or none of the steps described in this example, without departing from the novel techniques described herein.

It will be understood that, in preferred embodiments, the telecommunications network is a cellular network. Then, the plurality of data centres are (or comprise) Core Network data centres. However, other types of telecommunications network may be covered, including wireless telecommunications networks, for example, wireless Local Area Network (LAN) systems.

Any of the methods described herein may be implemented as a computer program. The computer program may be configured to control a mobile station (MS), UE and/or a network node or entity to perform any method according to the disclosure. A server or network node of a telecommunications network may also be provided, configured to operate in accordance with certain methods disclosed herein. For example, the server or network node may include a processor and at least one communication interface, particularly comprising one or both of a transmitter and receiver. Any UE may likewise include a processor and at least one communication interface, particularly comprising one or both of a transmitter and receiver.

Although specific embodiments have now been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. It will also be appreciated that changes to the specific messaging and message content are possible, including omission of message or specific content. The order of steps may also be altered, especially where the same end result will be achieved. The steps described relating to the NSC and NSP are for exemplary reasons only, to describe possible steps being carried out in addition to the method of the new entity (intelligent network entity) described herein and are not limiting. It will be understood that one or more entities, although described as separate herein, may be one entity. For example, the intelligent network entity may be located within the NSP, such that information is not transmitted between the intelligent network entity and the NSP but it is sent from one part of the NSP to another, without leaving the NSP itself. The advantageous example of a cellular network has been considered herein, but it will be recognised that the same approach can be applied to other telecommunications networks. Also, combinations of any specific features shown with reference to one embodiment (or aspect) or with reference to multiple embodiments (or aspects) are also provided, even if that combination has not been explicitly detailed herein.

## Claims

1. A method for use in creating a Network Slice in a telecommunications network, the method comprising:
receiving, at an intelligent network entity, information from a plurality of network nodes with which the Network Slice can be realised;
generating, at the network entity, in response to a request received at the network entity containing one or more criteria for the Network Slice, a list of one or more network nodes using a machine learning model and the received information, wherein the list indicates a level of confidence that each of the one or more network nodes can fulfil the one or more criteria; and
wherein the list is provided to a Network Service Provider, NSP, such that the NSP can identify, based on the level of confidence of each one or more network nodes in the list, whether there are suitable network nodes in the telecommunications network for creating the Network Slice.

2. The method according to claim 1, wherein each of the plurality of network nodes are located within a data centre, and wherein the plurality of network nodes are each located within a different data centre.

3. The method according to any preceding claim, wherein the step of receiving information is performed continuously, repeatedly, and/or dynamically.

4. The method according to any preceding claim wherein the machine learning model is trained using the received information.

5. The method according to any preceding claim wherein there are a plurality of criteria, one or more of the criteria are given a priority with respect to the other criteria.

6. The method according to any preceding claim wherein one of the criteria is that the network node is within a data centre which has a minimum of renewable energy presence.

7. The method according to any preceding claim where the list comprises multiple network nodes, and wherein the method further comprises ordering the network nodes based on the level of confidence of each network node.

8. The method according to any preceding claim wherein each of the one or more criteria relate to one or more of: communication service characteristics, capacity, traffic patterns, energy, latency, or location.

9. The method according to any preceding claim wherein the machine learning model is trained using data containing information on one or more of: communication service characteristics, capacity, traffic patterns, energy, latency, or location.

10. The method of any preceding claim, wherein the telecommunications network is a cellular network, and the plurality of data centres are Core Network data centres.

11. The method according to any preceding claim wherein the method comprises the NSP communicating the identity of a suitable network node to a Network Slice Customer.

12. An intelligent network entity for identifying one or more suitable network nodes for creating a Network Slice, the network entity being configured to perform the method of any of claims 1 to 10.
